# EUROPEAN PATENT SPECIFICATION

(11) **EP 0 343 768 B1**
(45) Date of publication and mention of the grant of the patent: **12.07.1995**
(21) Application number: 89302135.2
(22) Date of filing: 03.03.1989
(51) Int. Cl.: G06F 12/08

(54) **Microcomputer system incorporating a cache subsystem using posted writes**
Mikrorechnersystem, der ein Cache-Subsystem mit Nachschreibfähigkeit enthält
Système microordinateur avec un sous-système à antémémoire avec post-écriture

(30) Priority: 26.05.1988 US 198893
(43) Date of publication of application: 29.11.1989
(73) Proprietor: International Business Machines Corporation, Armonk, N.Y. 10504 (US)
(72) Inventor: Begun, Ralph Murray, Boca Raton Florida 33486 (US); Bland, Patrick Maurice, Delray Beach Florida 33445 (US); Dean, Mark Edward, Delray Beach Florida 33484 (US)
(74) Representative: Burt, Roger James, Dr.

(56) References cited:
- ELECTRONICS, vol. 60, no. 12, 11th June 1987, pages 74-76, New York, US; B.C. COLE: "How a cache control chip supercharges 386 processor"
- ELECTRONICS & WIRELESS WORLD, vol. 93, no. 1621, November 1987, pages 1121-1123, Sutton, Surrey, GB; D. JONES et al.:"The 68030"

## Description

The present invention relates to microcomputer systems, particularly microcomputer systems employing a cache subsystem including a cache controller and which is operable to post write cycles.

The use of cache subsystems in microcomputer systems leads to a number of attractive operating advantages. A microcomputer system employing a cache subsystem is in effect a dual bus microcomputer. The CPU and cache subsystem are connected together via what can be referred to as a CPU local bus. Separate from the CPU local bus is a system bus to which other devices (I/O devices, additional memory, etc.) can be connected. The presence of the cache subsystem relieves the system bus from any read memory access to the extent that the information sought is found in the cache subsystem. Because not all desired information will be found in the cache subsystem, and write operations are usually directed to both the cache subsystem and to memory, there must of course be some connection between the system bus and the CPU local bus. When that connection is a latched buffer, additional advantages, specifically posted write operations, are possible.

More particularly, in any write operation, access will be necessary to memory (which is not on the CPU local bus). The information (data and address) for the write access is initially placed on the CPU local bus where it can be used for writing to the cache subsystem. Since the interface between the CPU local bus and the system bus is a latched buffer, the same data can be latched into the buffer. Once that information is latched onto the buffer, it need no longer be driven by the CPU. Thus a posted write cycle relies on the fact that the address and data information for a memory write operation is available from the latched buffer. Completion of that write cycle does not require the attention of the CPU. Thus in a "posted" write, the data and address for the write cycle is latched into the buffer interfacing the CPU local bus and system bus whereafter the CPU can go on to initiate a subsequent cycle. The cache control system (including the cache controller) can then monitor completion of the write to memory.

Microcomputer systems comprising an 80386 processor and an 82385 cache controller, both of which are manufactured by Intel Corporation, are arranged to take advantage of posted write operations in exactly this fashion.

The 80386, and the signals it generates, are described in "Introduction to the 80386 Including the 80386 Data Sheet" from Intel Corporation (April 1986). The 82385 cache controller, and the signals it generates, are described in "82385 High Performance 32-Bit Cache Controller", available from Intel Corporation (July 1987).

Another attractive feature of the 80386 is its capability for operating with what is referred to as dynamic bus sizing. The 80386 is nominally a 32-bit machine, i.e. its data bus is 32 bits wide. Dynamic bus sizing refers to the capability of the 80386 processor to cooperate with not only 32-bit devices (memory, I/O, etc.) but with devices which do not have 32-bit capability, i.e. devices that cannot transfer 32 bits of data in a single cycle. There are for example a wide variety of memory and/or I/O devices which are 16-bit devices, i.e. they can transfer no more than 16 bits of data on a given cycle. Moreover, there are 8-bit I/O, memory and other devices. Such devices can transfer only eight bits of data on a given cycle.

The 80386 includes provision for a BS16 signal. When that signal is asserted, it has the following effect. In the event the 80386 has generated a 32-bit cycle, i.e. it has generated and/or expects to accept 32 bits of data, the assertion of the BS16 signal indicates to the 80386 that it is not operating with a 32-bit device. Assertion of the BS16 signal will, during the 32-bit cycle, automatically initiate the generation of a second cycle. By convention, any 16- bit device is arranged to transfer a predetermined group of 16 bits from the 32-bit data bus. The 80386, on the second cycle generated by the presence of the BS16 signal will place that group of 16 data bits which in the first cycle was not in the predetermined group of data bits onto a predetermined group of data lines which is associated with the predetermined group of 16 bits. Accordingly, in the first of the two cycles, the 16-bit device will transfer a given set of 16 bits of the 32 bits data space. In the second cycle, the 16-bit device will transfer another 16 bits of data so that, taken together, the two 16-bit cycles transfer 32 bits.

There is, however, an incompatibility between posted write cycles and dynamic bus sizing. That incompatibility arises for the following reason. Assume that the 80386 initiates a posted write. The data and address for the posted write cycle are latched into the buffered interface between the CPU local bus and the system bus. Although the write cycle is not yet completed, a ready signal is returned to the 80386. This simulates completion of the cycle so that the 80386 can initiate a following operation. Since the BS16 signal (which is returned to the 80386 to indicate the size of the device with which it is operating) is generated by the device, that signal is not generated until the device has recognized its address. Continuing with the example, and assuming that the device for which the posted write cycle is destined is in fact a 16-bit device, by the time the BS16 signal is returned to the 80386, it has already gone beyond the given operation and is engaged in the following operation. The 80386 therefore cannot generate the second, necessary cycle for the 16-bit device.

Therefore it is an object of the invention to selectively post write cycles.

This object is achieved by the invention claimed in claim 1.

An embodiment of the invention will now be described with reference to the accompanying drawings, in which:
Fig. 1 is an overall three-dimensional view of a typical microcomputer system employing the present invention;
Fig. 2 is a detailed block diagram of a majority of the components of a typical microcomputer system employing the present invention;
Fig. 3 is a block diagram, in somewhat more detail than Fig. 2, showing those connections between an 80386 and 82385 recommended by the manufacturer and which is useful to an understanding of why such an arrangement is inconsistent with dynamic bus sizing; and
Fig. 4 is a block diagram, similar to Fig. 3, but illustrating application of the present invention for selectively posting write cycles.

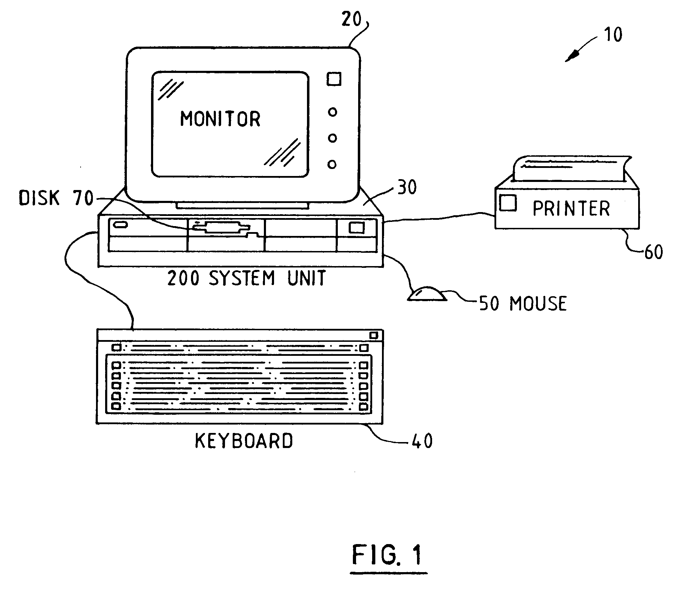

Fig. 1 shows a typical microcomputer system in which the present invention can be employed. As shown, the microcomputer system 10 comprises a number of components which are interconnected together. More particularly, a system unit 30 is coupled to and drives a monitor 20 (such as a conventional video display). The system unit 30 is also coupled to input devices such as a keyboard 40 and a mouse 50. An output device such as a printer 60 can also be connected to the system unit 30. Finally, the system unit 30 may include one or more disk drives, such as the disk drive 70. As will be described below, the system unit 30 responds to input devices such as the keyboard 40 and the mouse 50, and input/output devices such as the disk drive 70 for providing signals to drive output devices such as the monitor 20 and the printer 60. Of course, those skilled in the art are aware that other and conventional components can also be connected to the system unit 30 for interaction therewith. In accordance with the present invention, the microcomputer system 10 includes (as will be more particularly described below) a cache memory subsystem such that there is a CPU local bus interconnecting a processor, a cache control and a cache memory which CPU local bus is coupled via a buffer to a system bus. The system bus is interconnected to and interacts with the I/O devices such as the keyboard 40, mouse 50, disk drive 70, monitor 20 and printer 60. Furthermore, in accordance with the present invention, the system unit 30 may also include a third bus comprising a Micro Channel (TM) bus for interconnection between the system bus and other (optional) input/output devices, which may have different data widths.

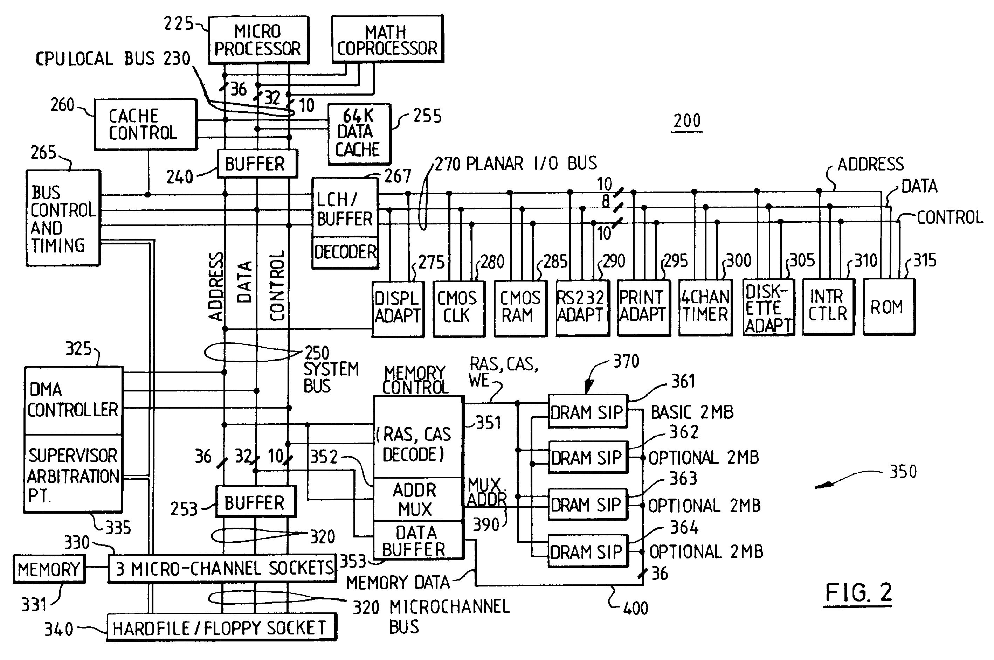

Fig. 2 is a high level block diagram illustrating the various components of a typical microcomputer system in accordance with the present invention. A CPU local bus 230 (comprising data, address and control components) provides for the connection of a microprocessor 225 (such as an 80386), a cache control 260 (which may include an 82385 cache controller) and a random access cache memory 255. Also coupled on the CPU local bus 230 is a buffer 240. The buffer 240 is itself connected to the system bus 250, also comprising address, data and control components. The system bus 250 extends between the buffer 240 and a further buffer 253.

The system bus 250 is also connected to a bus control and timing element 265 and a DMA controller 325. An arbitration control bus 340 couples the bus control and timing element 265 and an arbitration supervisor 335. Main memory 350 is also connected to the system bus 250. The main memory includes a memory control element 351, an address multiplexer 352 and a data buffer 353. These elements are interconnected with memory elements 361 through 364, as shown in Fig. 2. Memory devices and cacheable memory devices may be coupled to the bus 320; a typical memory device 331 is shown in Fig. 2.

A further buffer 254 is coupled between the system bus 250 and a planar bus 270. The planar bus 270 includes address data and control components, respectively. Coupled along the planar bus 270 are a variety of I/O adaptors and other components such as the display adaptor 275 (which is used to drive the monitor 20), a clock 280, additional random access memory 285, an RS 232 adaptor 290 (used for serial I/O operations), a printer adaptor 295 (which can be used to drive the printer 60), a timer 300, a diskette adaptor 305 (which cooperates with the disk drive 70), an interrupt controller 310 and read only memory 315. A further buffer 253 is coupled between the system bus 250 and a further bus, such as a Micro-Channel (TM) 320 bus used for connection of optional functional units.

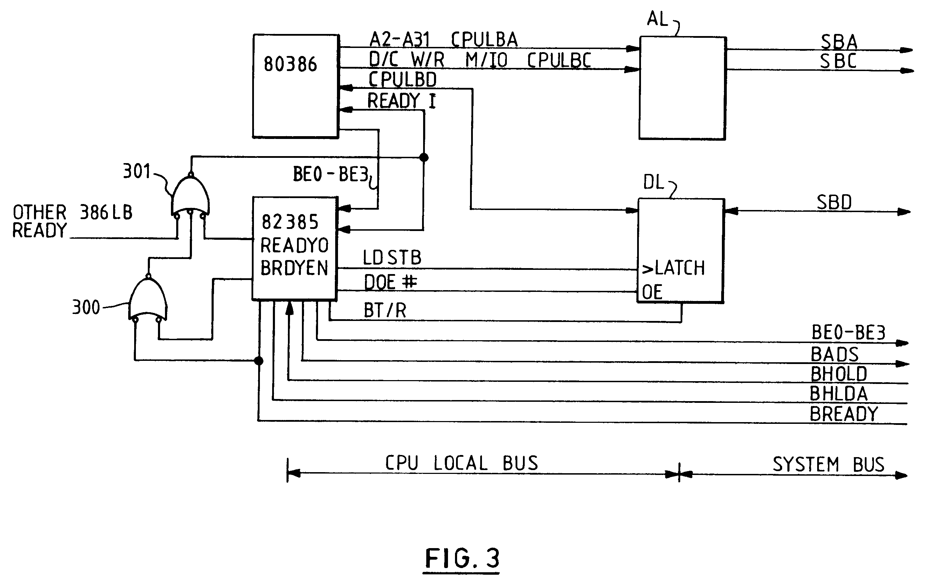

Fig. 3 is a block diagram of interconnections between the 80386, the 82385 cache controller, the latched buffer 240 forming the interface between the CPU local bus and the system bus, as recommended by the manufacturer. More particularly, Fig. 3 shows the address and control bus components of the CPU local bus CPULBA (including address conductors A2-A31 and the control conductors D/C, W/R and M/IO) are coupled to an input of the controlled Address Latch (AL) representing an element of buffer 240. The outputs of the latch AL are to the address component SBA and the control component SBC of the system bus. Likewise, the data input/output terminal of the 80386 (comprising conductors D0-D31) is connected to one terminal of the Data Latch (DL) between the CPU local bus and the system bus representing another element of buffer 240. The other terminal of DL is the data component of the system bus SBD. Fig. 3 shows that the 82385 cache controller provides a READYO signal to the 80386 via external logic represented by the AND gate 300 and the OR gate 301. READYI is the ready signal which indicates either that the bus cycle is completed or is asserted prior to completion of the system bus cycle on a posted write operation. Since DL is bidirectional, it can latch data either from the CPU local bus component (CPULBD) or from the system bus data component (SBD), the 82385 also provides a direction signal (BT/R) to indicate whether the DL transfers data from the CPU local bus or the system bus. The signals BE0-BE3 (both those output by the 80386 and the repeated signals output by the 82385) are additional, addressing signals. The 80386/82385 microcomputer system is arranged on each main memory access, to access a "line" of data representing four bytes. The 4-bit addressing signals (BE0-BE3) may be used to select one or more bytes from the four bytes in the "line". The signals BHOLD and BHLDA are a bus hold, bus hold acknowledge pair running between the 82385 cache controller and the arbitration supervisor 335. BADS is a signal indicating that the addressing element of the system bus SBA is asserting a valid address. BREADY is a ready signal from the system bus 250 to the 82385.

As shown in Fig. 3 and as explained in the referenced Intel manuals, all writes are posted, i.e. address and data is latched into the elements DL and AL of the buffer 240, and the 82385 then asserts READYO, enabling the 80386 to initiate a subsequent operation. The posted write can then be completed from the data in the AL and DL, as supervised by the 82385. So long as devices to which the posted write is directed are 32-bit devices, so that the write operation can be completed in a single cycle, or so long as the posted write is a 16-bit write to a 16- bit device, etc., posted writes are effective. On the other hand, to the extent that a posted write cycle encompasses data exceeding the size of the device to which the write is posted, then the posted write is inappropriate. The reason it is inappropriate is that in all such cases additional cycles are necessary (a 32-bit cycle to a 16-bit device requires two cycles, etc.). However, by the time the 80386 receives a BS16 signal indicating (for a 32-bit cycle) that the posted write is to a 16-bit device, it is already into the subsequent operation and cannot repeat the earlier cycle.

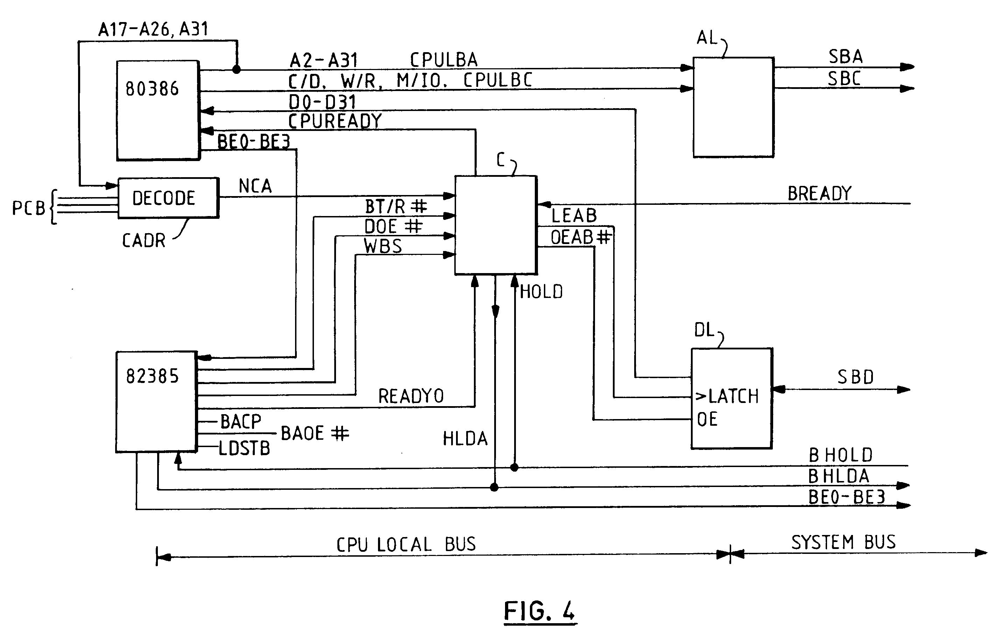

Fig. 4 is similar to Fig. 3 but shows how the 80386, 82385, AL, DL, the CPU local bus 230 and the system bus 250 are interconnected in accordance with the present invention. The BT/R output of the 82385, instead of being coupled to the DL, is now input to a new control element C. Other inputs to the control element C include the DOE# signal and the WBS signal from the 82385 and the READYO (which previously had been connected to the 80386 - see Fig. 3). A decoder CADR is coupled to the CPU local bus address component (CPULBA), and more particularly tag bits A17-A26 and A31. The CADR asserts a signal NCA which is input to the control element C indicating an asserted address on the CPULBA which is an address of a non-cacheable device. Likewise, control signals for the element DL, specifically LEAB (to latch data into the element DL) and OEAB# (to enable the output of the DL element) now originate in the control element C. A further input to the control element C is the signal BREADY, generated by the system bus.

The decoder CADR receives, in addition to its inputs from bits A17-A26 and A31 of the CPULBA, Programmable Cacheability Bits (PCB). In an embodiment actually constructed, the first of these three bits represents a decision to allow caching ROM space. A second bit either enables the decoder CADR to output NCA based on the decoded information, or alternatively, to declare all accesses non-cacheable, i.e. assert NCA regardless of the asserted address on the CPULBA. Finally, a third bit indicates, in one state, that address space between 0 and 8 megabytes is cacheable and that address space between 8 to 16 megabytes is non-cacheable. In the other state, the bit indicates that address space in the range 0 to 16 megabytes is all cacheable. If desired, the effect of this bit can be multiplied by simply reflecting the status of the first 16 megabytes through the succeeding 16 megabyte ranges. Of course, the use of these particular cacheability indicators (or others) is not essential to the invention. It is, however, important to arrange the CADR so that it can quickly decode its inputs and produce NCA. In an embodiment actually constructed, the timing window for production of NCA, from valid addresses on the CPULBA, was very short, on the order of ten nanoseconds.

The term CPUREADY is defined below (see Equation 7). The fifth line of the equation (on the right side of the equals sign) indicates the dependence of CPUREADY on NCA, i.e. when NCA is asserted along with READYO, CPUREADY is negated.

Concurrent with CPUREADY being asserted, LEAB must be asserted to latch the data to be written in DL. The signal LEAB is defined in Equation 8 (below). It includes a set term (on the first line, on the right side of the equals sign) and two hold terms on the second and third lines. The set term requires the conjunction of /BUSCYC386, /CPUREADY, (W/R), CLK and ADS.

In an embodiment of the invention actually constructed, the control logic C (as well as other control logic not illustrated which implemented other of the Equations 1-11, shown below) was implemented in the form of Programmable Array Logic. It should be apparent to those skilled in the art that other conventional logic implementations are also available.

Accordingly, by using the external logic shown in Fig. 4 (and explained below in connection with the logic equations), posted writes are only available for cacheable accesses. By definition a cacheable access is a 32-bit device, although there may well be other 32-bit devices which are non-cacheable. The major decision required to implement this invention is to decide whether a posted write is appropriate. Once that decision is made, it is implemented by developing the appropriate control signals to DL and AL. The signals created by the 82385 are appropriate to the extent compatible with the decision to post the write.

Accordingly, use of the invention allows posted operations to proceed notwithstanding the fact that devices smaller than 32 bits may well be coupled on the system bus and/or the optional feature bus.

The logic equations which have been referenced above are reproduced immediately below. In this material the symbols have the following meanings associated with them:

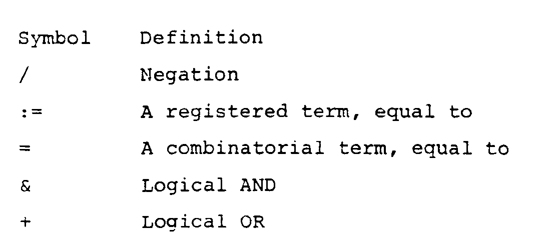

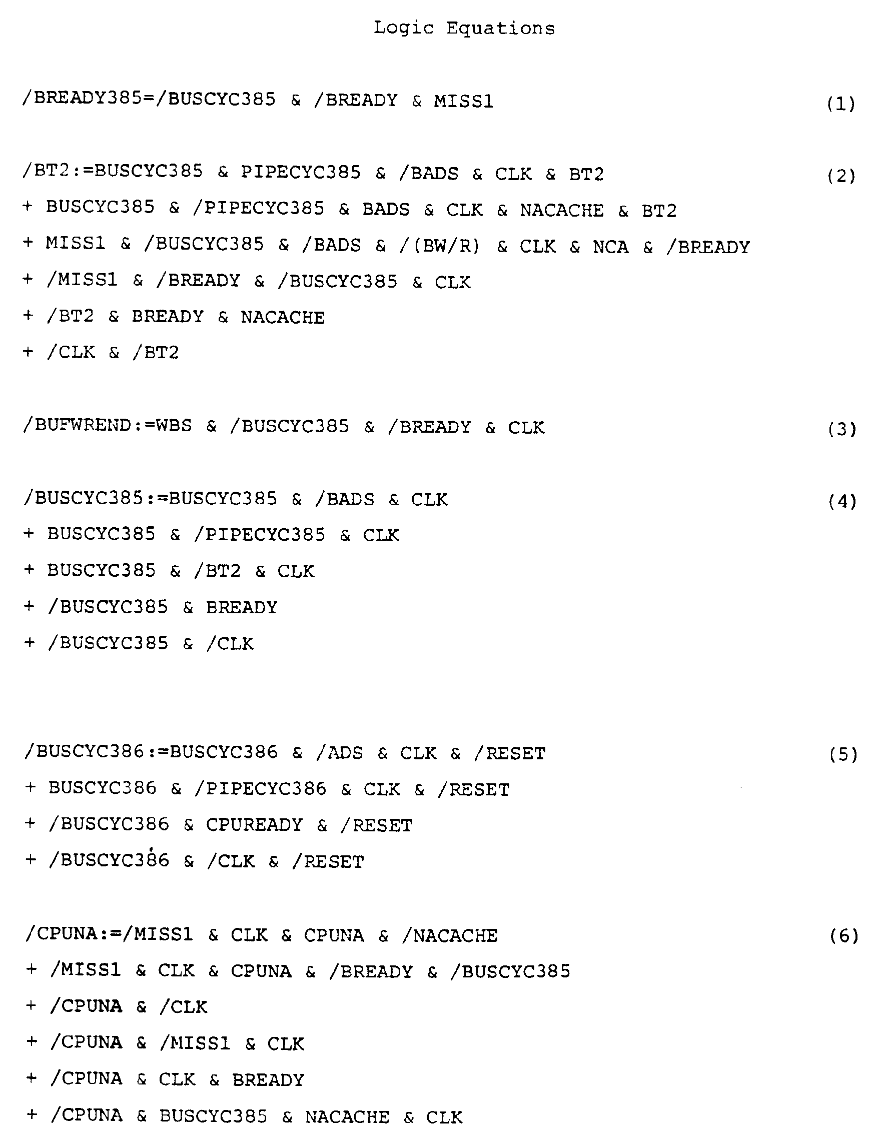

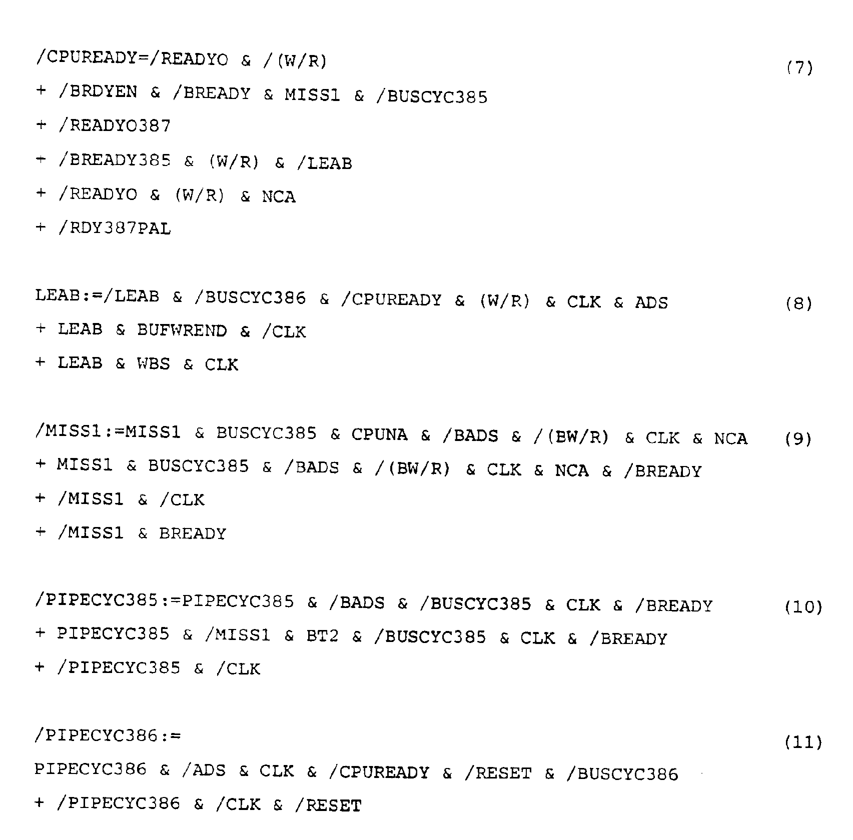

In the foregoing logic equations the following signals are described or referred to in the cited Intel publications:
ADS
BADS
BRDYEN
BREADY
- (BW/R): actually referred to as BW/R, the parenthesis are used to indicate that the entire term is one signal

CLK
READYO
RESET
WBS
- (W/R): actually referred to as W/R, the parenthesis are used to indicate the entire term is one signal

ADS, when active indicates a valid address on the CPU local bus 230. BADS, when active indicates a valid address on the system bus 250. BRDYEN is an output of the 82385 which is a antecedent of the READY signals. BREADY is a ready signal from the system bus 250 to the CPU local bus 230. BW/R defines a system bus 250 Write or Read. CLK is a processor clocking signal which is in phase with the processor 225. READYO is another output of the 82385 in the line of ready signals. RESET should be apparent. WBS indicates the condition of the Write Buffer. (W/R) is the conventional Write or Read signal for the CPU local bus 230. Equations (1)-(11) define:
BREADY385
BT2
BUFWREND
BUSCYC385
BUSCYC386
CPUNA
LEAB
MISS1
PIPECYC385
PIPECYC386
CPUREADY
in terms of the defined signals, the signals described or referred to in the cited Intel publications and NCA, NACACHE, READYO387 and RDY387PAL.

BREADY385 is a signal like BREADY which in an embodiment actually constructed was modified to accommodate a 64K cache. In the case of a 32K cache (as recommended by the manufacturer) BREADY can be used in lieu of BREADY385.

BT2 reflects the state of the system bus 250. The state BT2 is a state defined in the cited Intel publications.

BUFWREND represents the end of a buffered write cycle. BUSCYC385 also reflects the state of the system bus 250. It is high for bus states BTI, BT1, BT1P and low for bus states BT2, BT2P and BT2I (again these are bus states referenced in the cited Intel publications).

BUSCYC386 is high during CPU local bus 230 states TI, T1, T1P, T2I and low during T2. It is also low for T2P unless T2I occurs first.

CPUNA is a signal to the 80386 allowing pipelined operation.

LEAB is the latch enable (into buffer 240) for posted writes.

MISS1 is active defining the first cycle in a double cycle for handling 64 bit reads to cacheable devices.

PIPECYC385 is active during BT1P (which is a bus state referred to in the cited Intel publications.

PIPECYC386 is low during state T1P of the CPU local bus 230.

CPUREADY is the ready input to the 80386.

NCA is a signal created by decoding the address component on the CPU local bus 230 to reflect, when active, a non-cacheable access. Cacheability is determined by a tag component (A31 to A17) and programmable information defining what tags (if any) refer to cacheable as opposed to non-cacheable addresses.

NACACHE is a signal similar to the BNA signal. BNA is a system generated signal requesting a next address from the CPU local bus 230, and is referenced in the cited Intel publications. NACACHE differs from BNA only in respect of the fact that BNA is created for 32K cache while NACACHE is created for a 64K cache. So long as the cache memory is 32K, as cited in the Intel publications the NACACHE signal referred to here could be replaced by the BNA signal.

READYO387 is the ready output of a 80387 math coprocessor, when fitted into the system.

RDY387PAL is an output of external logic used in the event a 80387 math coprocessor is not installed to prevent the absence of the math coprocessor from interfering in system operations.

It should be apparent that the present invention has overcome any potential incompatibility between dynamic bus sizing and posted write operations. More particularly, this incompatibility is overcome by detecting whether the address asserted on the CPU local bus 230 is or is not within a range of addresses identified as cacheable. Posted write operations are allowed only to cacheable devices. CPUREADY is generated to allow the CPU to proceed to a next operation. It may or may not be generated prior to completion of a pending operation. Referring to Equation 7, the term defined in line 1 relates to a read hit. This operation interacts with cache and is a zero wait state operation so CPUREADY is active. Line 2 relates to cache read misses. CPUREADY only becomes active with BREADY active, i.e. the cycle is not posted. Line 4 relates to non- posted write, e.g. CPUREADY is active only with BREADY385 (similar to BREADY). Line 5 relates to a cacheable (NCA inactive) write and so this is a posted operation, i.e. CPUREADY is active without BREADY or BREADY385.

## Claims

1. A microcomputer system comprising a microprocessor (225), a cache store (255) of fixed data width, and a cache controller (260), all coupled to a local bus (230) which is coupled through latch means (240) to a system bus (250) having system components (275-315) of differing data widths attached thereto, said microprocessor (225) being operable to post writes to the system bus (250) whereby data and addresses from the microprocessor are latched into the latch means (240) and a ready signal (READYO) is directed to the microprocessor from the cache controller to initiate a following microprocessor cycle, characterised in that a decoder (CADR) is connected to address outputs (A17-A26, A31) of the microprocessor (225) to provide an output (NCA) indicating when system components are addressed whose data width is less than the data width of the cache store (255), and logic means (C) is connected to receive the output of said decoder (CADR) and said ready signal (READYO) for withholding said ready signal to the microprocessor in respect of said addressed system components.

2. A microcomputer system according to claim 1 in which said logic means (C) is coupled to receive a bus ready signal (BREADY) from said system bus (250), whereby said ready signal (READYO) to the microprocessor from the logic means is withheld until receipt of the bus ready signal.

3. A microcomputer system according to claim 1 or claim 2 in which said latch means includes a bi-directional data buffer (AL, DL) connected between the local bus (230) and the system bus (250) and having an input enable control input (LEAB) and an output enable control input (OEAB), said logic means (C) including control means for generating control signals for said inputs.

4. A microcomputer system according to any one of the previous claims in which said logic means (C) is responsive to a signal (NCA) from the decoder (CADR) indicating generation of an address of a system component whose data width is the same as the data width of the cache store (255) to generate said ready signal (READYO) prior to receipt of a bus ready signal (BREADY) from the system bus (250).

5. A microcomputer system according to any one of the previous claims in which said decoder (CADR) is connected to receive selected ones only of the address outputs of the microprocessor (225).

6. A microcomputer system according to any one of the previous claims further including an optional feature bus (320) coupled to a plurality of optional feature slots (330) for connecting optional feature units to the optional feature bus, said units having differing data widths, coupling means (253) for bidirectionally coupling the optional feature bus to the system bus (250) for directing a bus ready signal from an optional feature unit, generated on completion of a write operation to that unit, through the system bus (250) to the local bus (230) to provide a ready signal to the microprocessor (225) when the ready signal from the logic means is withheld.

## Patentansprüche

1. Ein Mikrorechnersystem mit einem Mikroprozessor (225), einem Cache-Speicher (255) mit fester Datenbreite und einem Cache-Controller (260), die mit einem Localbus (230) gekoppelt sind, der über Zwischenspeicher-Mittel (240) mit einem Systembus (250) gekoppelt ist, wobei an diesen Systemkomponenten (275-315) mit unterschiedlichen Datenbreiten angeschlossen sind, wobei der genannte Mikroprozessor (225) Schreiboperationen an den Systembus (250) hinterlegen kann, wodurch Daten und Adressen vom Mikroprozessor in dem Zwischenspeicher-Mittel (240) zwischengespeichert werden, und ein Bereit-Signal (READYO) vom Cache-Controller an den Mikroprozessor geschickt wird, um einen nachfolgenden Mikroprozessorzyklus einzuleiten, dadurch gekennzeichnet, daß ein Decodierer (CADR) an die Adreßausgänge (A17-A26, A31) des Mikroprozessors (225) angeschlossen ist, um einen Ausgang (NCA) bereitzustellen, der anzeigt, wenn Systemkomponenten adressiert werden, deren Datenbreite unter der Datenbreite des Cache-Speichers (255) liegt, und ein Logik-Mittel (C) angeschlossen ist, um den Ausgang des genannten Decodierers (CADR) und das genannte Bereit-Signal (READYO) zu empfangen, um das genannte Bereit-Signal an den Mikroprozessor in bezug auf die genannten adressierten Systemkomponenten zurückzuhalten.

2. Ein Mikrorechnersystem nach Anspruch 1, in dem das genannte Logik-Mittel (C) so gekoppelt ist, daß es ein Bus-Bereit-Signal (BREADY) von dem genannten Systembus (250) empfängt, wodurch das genannte Bereit-Signal (READYO) zum Mikroprozessor von dem Logik-Mittel zurückgehalten wird, bis das Bus-Bereit-Signal empfangen wird.

3. Ein Mikrorechnersystem nach Anspruch 1 oder Anspruch 2, in dem das genannte Zwischenspeicher-Mittel einen bidirektionalen Datenpuffer (AL, DL) enthält, der zwischen dem Localbus (230) und dem Systembus (250) angeschlossen ist und über einen Eingangs-Freigabe-Steuereingang (LEAB) und einen Ausgangs-Freigabe-Steuereingang (OEAB) verfügt, wobei das genannte Logik-Mittel (C) Steuermittel zur Erzeugung von Steuersignalen für die genannten Eingänge enthält.

4. Ein Mikrorechnersystem nach jedem der vorherigen Ansprüche, in dem das genannte Logik-Mittel (C) auf ein Signal (NCA) vom Decodierer (CADR) reagiert, das die Erzeugung einer Adresse von einer Systemkomponente anzeigt, deren Datenbreite der Datenbreite des Cache-Speichers (255) entspricht, um das genannte Bereit-Signal (READYO) vor Empfang eines Bus-Bereit-Signals (BREADY) vom Systembus (250) zu erzeugen.

5. Ein Mikrorechnersystem nach jedem der vorherigen Ansprüche, in dem der genannte Decodierer (CADR) so angeschlossen ist, daß er nur ausgewählte Ausgänge der Adreßausgänge des Mikroprozessors (225) empfängt.

6. Ein Mikrorechnersystem nach jedem der vorherigen Ansprüche, desweiteren einen Bus mit optionalen Funktionen (320) enthaltend, der an eine Vielzahl von Einbauplätzen mit optionalen Funktionen (330) gekoppelt ist, um Einheiten mit optionalen Funktionen an den Bus mit optionalen Funktionen anzuschließen, wobei die genannten Einheiten über unterschiedliche Datenbreiten verfügen, Kopplungsmittel (253), um den Bus mit den optionalen Funktionen bidirektional mit dem Systembus (250) zu koppeln, um ein Bus-Bereit-Signal von einer Einheit mit optionalen Funktionen, das bei Abschluß einer Schreiboperation zu dieser Einheit erzeugt wird, durch den Systembus (250) an den Localbus (230) zu leiten, um ein Bereit-Signal zum Mikroprozessor (225) zu senden, wenn das Bereit-Signal von dem Logik-Mittel zurückgehalten wird.

## Revendications

1. Système micro-informatique comprenant un microprocesseur (225), une antémémoire (255) de largeur binaire fixe et un contrôleur d'antémémoire (260) tous couplés à un bus local (230) lui-même connecté, via un registre à verrouillage (240), à un bus système (250) auquel sont reliés des éléments de système (275 à 315) de différentes largeurs binaires, ledit microprocesseur (225) permettant d'enregistrer des cycles d'écriture (250) sur le bus système (250) grâce à la mémorisation de données et d'adresses dans le registre à verrouillage (240) et à la transmission d'un signal prêt (READYO) entre le contrôleur d'antémémoire et le microprocesseur pour lancer un cycle de microprocesseur suivant, caractérisé en ce qu'un décodeur (CADR) est connecté aux sorties d'adresses (A17 à A26, A31) du microprocesseur (225) pour produire un signal de sortie (NCA) indiquant quand les éléments de système adressés ont des largeurs binaires inférieures à la largeur binaire de l'antémémoire (255), et en ce qu'un élément logique (C) est connecté pour recevoir la sortie du dit décodeur (CADR) et le dit signal prêt (READYO) pour différer le signal prêt destiné au microprocesseur en fonction des dits éléments de système adressés.

2. Système micro-informatique selon la revendication 1, dans lequel ledit élément logique (C) est couplé de sorte à recevoir un signal "bus prêt" (BREADY) en provenance du dit bus système (250), caractérisé en ce que le dit signal prêt (READYO) à destination du microprocesseur en provenance de l'élément logique est différé jusqu'à réception du signal "bus prêt".

3. Système micro-informatique selon la revendication 1 ou 2, dans lequel ledit registre à verrouillage comprend une mémoire-tampon bidirectionnelle (AL, DL) connectée entre le bus local (230) et le bus système (250) et ayant une entrée de commande de validation d'entrée (LEAB) et une entrée de commande de validation de sortie (OEAB), ledit élément logique (C) comprenant un élément de commande pour générer des signaux de commande destinés aux dites entrées.

4. Système micro-informatique selon l'une quelconque des revendications précédentes, dans lequel ledit élément logique (C) est sensible à un signal (NCA) en provenance du décodeur (CADR) indiquant la génération d'un adresse d'un élément de système dont la largeur binaire est identique à celle de l'antémémoire (255) pour générer ledit signal prêt (READYO) avant réception d'un signal "bus prêt" (BREADY) en provenance du bus système (250).

5. Système micro-informatique selon l'une quelconque des revendications précédentes, dans lequel ledit décodeur (CADR) est connecté pour recevoir seulement une sélection des sorties d'adresses du microprocesseur (225).

6. Système micro-informatique selon l'une quelconque des revendications précédentes comprenant, de plus, un bus optionnel (320) couplé à une pluralité d'emplacements optionnels (330) permettant de connecter des unités optionnelles au bus optionnel, les dites unités ayant des largeurs binaires différentes; un dispositif de couplage (253) pour assurer la connexion bidirectionnelle du bus optionnel au bus système (250) afin d'acheminer un signal "bus prêt" entre une unité optionnelle (signal généré à la fin d'une opération d'écriture sur cette unité) et le bus local (230), via la bus système (250), pour transmettre un signal prêt au microprocesseur (225) lorsque le signal prêt en provenance de l'élément logique est différé.
